# EUROPÄISCHE PATENTANMELDUNG

(11) **EP 1 120 326 A1**
(43) Veröffentlichungstag der Anmeldung: **01.08.2001**
(21) Anmeldenummer: 00101588.2
(22) Anmeldetag: 27.01.2000
(51) Int. Cl.: B62B 3/00

(54) **Rollpalette für Lebensmittel- und Getränkemärkte**

(71) Anmelder: W. Feil GmbH, 59909 Bestwig-Nuttlar (DE)
(72) Erfinder: Beiner, Günther, 32657 Lemgo-Kirchheide (DE); Biehl, Waldemar, 59581 Warstein (DE)
(74) Vertreter: Kroher, Jürgen

(57) **Zusammenfassung**

Eine Rollpalette für Lebensmittel- oder Getränkemärkte aus einem mit Laufrollen (2) versehenen Bodenteil (1) und zwei einander gegenüberstehenden, sich von dem Bodenteil im Randbereich desselben erhebenden Seitenteilen (3,4), die Seitenwände bilden, weist über den Bodenteil an einer Stelle, die vom oberen Ende der Seitenteile wenigstens so weit entfernt ist, wie der Abstand zwischen den Seitenteilen beträgt, an der Innenseite des einen Seitenteils einen Klappboden (5) auf und in etwa gleicher Höhe an der Innenseite des anderen Seitenteils eine Auflagereinrichtung (6b) für den Klappboden.

## Beschreibung

Die Erfindung bezieht sich auf eine Rollpalette für Lebensmittel- oder Getränke-Märkte und für die Belieferung solcher Märkte mit Waren, bestehend aus einem mit Laufrollen versehenen rechteckigen Bodenteil und zwei sich parallel einander gegenüberstehenden, sich von dem Bodenteil im Randbereich desselben vertikal erhebenden Seitenteilen, die Seitenwände bilden.

Rollpaletten dieser Art sind allgemein bekannt und dienen der Aufnahme gestapelter Waren, die insbesondere zu Mehreren jeweils in Umverpackungen, wie Kartons oder Kartonpaletten, untergebracht sind. Mit Hilfe dieser Rollpaletten können die Waren im Lieferfahrzeug und im Lebensmittel- oder Getränkeeinzelhandel leicht bewegt werden.

Solche Rollpaletten haben im allgemeinen Grundrißabmessungen von 720 cm x 810 mm und eine Höhe, die etwa im Bereich von 1,50 m bis 1,60 m liegt, d.h. sie sind relativ schlank. Wenn das Volumen einer solchen Rollpalette bestmöglich ausgenutzt wird, besteht das Problem, daß die oberer Warenlagen aufgrund ihres Gewichts die Ware oder deren Verpackung in unteren Warenlagen beschädigen können, beispielsweise indem die Verpackungen eingedrückt werden. Um solches zu vermeiden, muß beim Beladen der Rollpalette darauf geachtet werden, daß die schwereren Waren, die zumeist in stabilerer Verpackung untergebracht sind, zuerst aufgeladen werden, bevor man die leichteren Waren auf die schwereren Waren stapelt, oder aber man nutzt das Fassungsvermögen der Palette nicht voll aus. Beides ist in der Praxis unbefriedigend.

Der Erfindung liegt daher die Aufgabe zugrunde, eine Rollpalette der eingangs genannten Art anzugeben, die vielseitig einsetzbar ist und insbesondere den Beladungsvorgang, aber auch den Entladevorgang erleichtert und einer Beschädigung der von ihr aufgenommenen Waren vorbeugt.

Diese Aufgabe wird durch die im Anspruch 1 angegebenen Merkmale gelöst. Vorteilhafte Ausgestaltungen der Erfindung sind Gegenstand der Unteransprüche.

Die Erfindung schafft eine Rollpalette, deren Warenaufnahmeraum durch einen Zwischenboden unterteilbar ist. Um die Rollpalette vielseitig einsetzbar und bequem handhabbar zu machen, ist dieser Zwischenboden als Klappboden ausgebildet, so daß er wahlweise hochgeklappt sein kann, was das Beladen des unteren Bereichs der Rollpalette erleichtert oder aber akzeptabel ist, wenn die Rollpalette ausschließlich mit leichten und insbesondere großvolumig verpackten Waren beladen wird, oder aber heruntergeklappt werden kann, was in der Praxis erst nach dem Beladen des unteren Bereichs der Rollpalette geschieht.

Es sind Rollpaletten mit Zwischenboden zwar an sich bereits bekannt, bei ihnen ist dieser aber an einem dritten Seitenteil angebracht, das sich zwischen den einander parallelen Seitenteilen erstreckt. Der Warenaufnahmeraum dieser Rollpalette ist daher nur von einer Seite zugänglich, was für die Praxis wiederum nachteilig ist.

Der Klappboden ist zweckmäßigerweise mit Einrichtungen versehen, mit denen er im Bereich seines freien Endes mit dem seiner Gelenkachse gegenüberliegenden Seitenteil der Rollpalette verrastet werden kann. Auf diese Weise schafft der Klappboden eine seitliche Aussteifung der beiden Seitenteile gegeneinander, die einem Auseinanderspreizen der Seitenteile unter dem Einfluß zwischen sie etwa eingekeilter Ware entgegenwirkt.

Der Zwischenboden ist in einer Höhe angebracht, daß er im hochgeklappten Zustand nicht über die obere Begrenzung des ihn tragenden Seitenteils hinaussteht. Zweckmäßigerweise sind Seitenteile und Klappboden derart gestaltet, daß der Klappboden im hochgeklappten Zustand den Querschnitt des von den Seitenteilen begrenzten Warenaufnahmeraums der Rollpalette nicht merklich verändert. Insbesondere kann das Seitenteil ein Wandteil haben, das als Wellprofil ausgebildet ist, und der Klappboden hat ein dazu passendes Wellprofil, so daß einerseits eine ausreichende Steifigkeit gewährleistet ist, andererseits aber durch Ineinandergreifen der Wellprofile der Platzbedarf für den Klappboden im wesentlichen auf dessen Materialdicke beschränkt ist.

Es ist günstig, wenn die Seitenteile aus Metallrahmen bestehen, an denen Seitenwandteile befestigt sind, insbesondere verrastet sind. Diese Seitenwandteile bestehen zweckmäßigerweise aus Kunststoffspritzteilen, die an den Metallrahmen verrastet sind, so daß auf Schraubverbindungen verzichtet werden kann.

Für die Anlenkung des Klappbodens weist der eine Rahmen zweckmäßigerweise einen Querholm auf, der als Scharnierstab für den Klappboden wirkt, während am gegenüberliegenden Seitenteil ein eben solcher Querholm angebracht ist, der der Auflage des Klappbodens im heruntergeklappten Zustand dient. Beide Seitenteile können somit identisch ausgebildet werden, es ist lediglich an das eine Seitenteil der Klappboden anzubringen, vorzugsweise durch Anklipsen. Dieses schafft auch die Möglichkeit modularer Bauweise, indem die Rollpaletten wahlweise mit und ohne Klappboden ausgerüstet werden können, ohne das an der Rollpalette, vom Anklipsen des Klappbodens abgesehen, irgend etwas geändert werden muß.

Da der Klappboden im heruntergeklappten Zustand auf seiner vollen Breite an den ihm benachbarten Seitenteilen abgestützt werden kann, ist es möglich, den Klappboden längsgeteilt auszubilden, was die Vielseitigkeit der Rollpalette im praktischen Gebrauch verbessert. Bei der oben beschriebenen bekannten Rollpalette ist eine solche Unterteilung nicht möglich, weil die Stabilität der Klappbodenhälften nicht ausreichend wäre.

Die Erfindung wir nachfolgend unter Bezugnahme auf die Zeichnungen näher erläutert. Es zeigt:
Fig. 1 eine perspektivische Darstellung einer erfindungsgemäßen Rollpalette;
Fig. 2 eine Draufsicht auf ein unteres Seitenwandteil der Rollpalette von Fig. 1;
Fig. 2a eine stirnseitige Ansicht des Seitenwandteils von Fig. 2.
Fig. 3 eine Draufsicht auf ein oberes Seitenwandteil der Rollpalette, wie in Fig. 1 dargestellt;
Fig. 3a eine Einzelheit aus Fig. 3 im Griffbereich in Querschnittsdarstellung;
Fig. 4 eine alternative Ausführungsform eines oberen Seitenteiles zur Verwendung bei einer Rollpalette, deren Seitenteile jeweils einen U-förmig gebogenen Rahmen mit verrundeten Ecken hat;
Fig. 4a eine Querschnittsdarstellung des Seitenwandteils von.
Fig. 5 eine Draufsicht auf eine Ausführungsform einer Hälfte eines Klappbodens von der Unterseite her, der für eine Seitenwand mit abgerundeten Ecken entsprechend dem Seitenwandteil von Fig. 4 geeignet ist, und
Fig. 5a eine Querschnittsdarstellung des Klappbodenteils von Fig. 5.

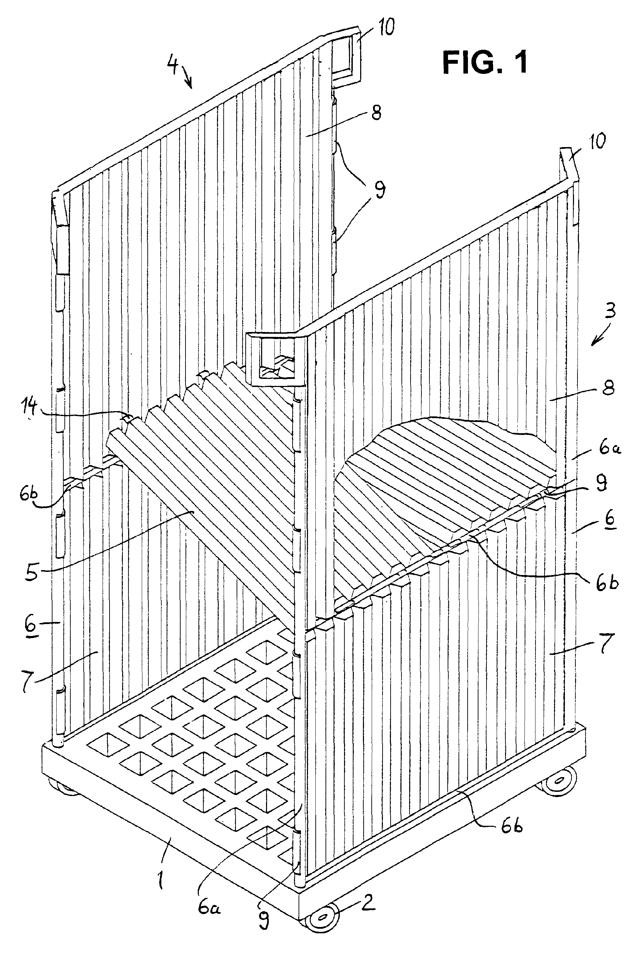

Fig. 1 zeigt eine perspektivische Ansicht einer Rollpalette mit den Merkmalen der Erfindung, bestehend aus einem Bodenteil 1, das vorzugsweise aus einem Kunststoffspritzteil besteht, mit an seiner Unterseite angebrachten, vorzugsweise lenkbaren Laufrollen 2, und zwei Seitenteilen, die insgesamt mit 3 und 4 bezeichnet sind und an zwei gegenüberliegenden Rändern des Bodenteils 1 verankert sind und vertikal hochstehen. An dem einen Seitenteil 3 ist etwa in halber Höhe ein im dargestellten Beispiel zweiteiliger Klappboden 5 angelenkt, der wahlweise in die Vertikale oder in die Horizontale geklappt werden kann, und zwar jedes der beiden Teile des Klappbodens 5 individuell.

Die Seitenteile 3 bestehen jeweils aus einem im Bodenteil 1 verankerten Rohrrahmen 6 aus vertikalen Holmen 6a und horizontalen Holmen 6b, von denen einer nahe dem Bodenteil 1 verläuft und der andere etwa in halber Höhe der Vertikalerstreckung der Seitenteile angebracht ist. Ggf. kann auch am oberen Ende des Rahmens 6 ein Querholm vorhanden sein.

An jedem Rahmen 6 ist ein unteres Seitenwandteil 7 und ein oberes Seitenwandteil 8 befestigt. Diese Seitenwandteile 7 und 8 bestehen vorzugsweise aus Kunststoffspritzteilen und sind im Querschnitt im wesentlichen wellig ausgebildet, um bei geringem Materialeinsatz eine möglichst große Stabilität zu gewährleisten. Die Seitenwandteile 7 und 8 weisen jeweils elastische Greifklauen 9 auf, mit denen sie an den Holmen des Rahmens 6 verrastet sind.

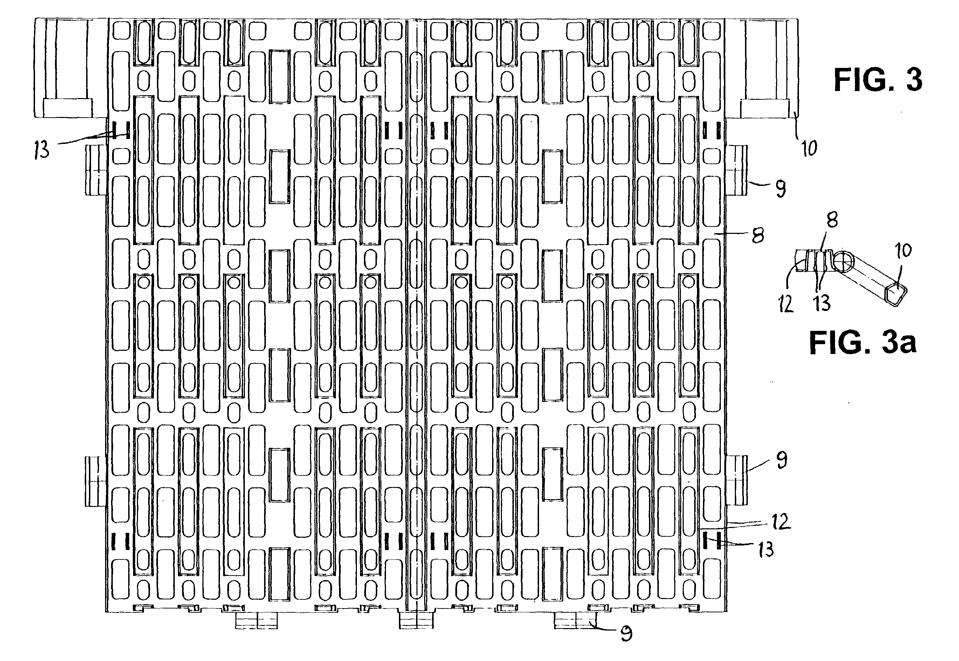

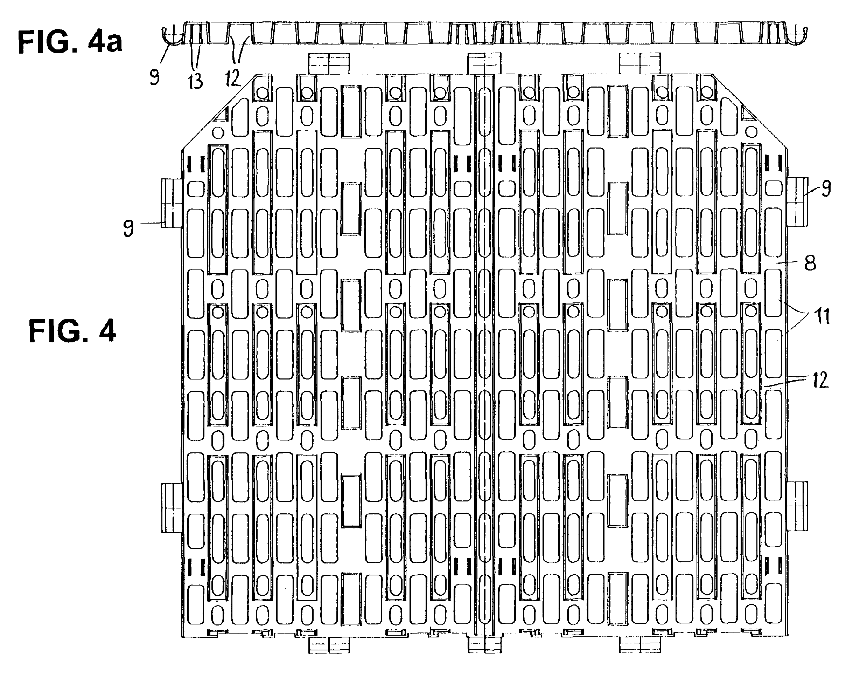

Die oberen Seitenwandteile 8 haben in dem in den Fig. 1 und 3 dargestellten Beispiel an ihren oberen Ecken jeweils einen integral ausgebildeten Griff 10. Diese Griffe 10 erleichtern das Rangieren können auch für die Anbringung von Spanngurten verwendet werden. Auf die Griffe 10 kann aber auch verzichtet werden, insbesondere wenn der Rahmen 6 U-förmig gebogen ist, wobei die Verbindung zwischen einem oberen Querholm und den vertikalen Holmen 6a bogenförmig verläuft. Ein oberes Seitenwandteil 8 zur Verwendung in einem solchen Rahmen ist in Fig. 4 dargestellt.

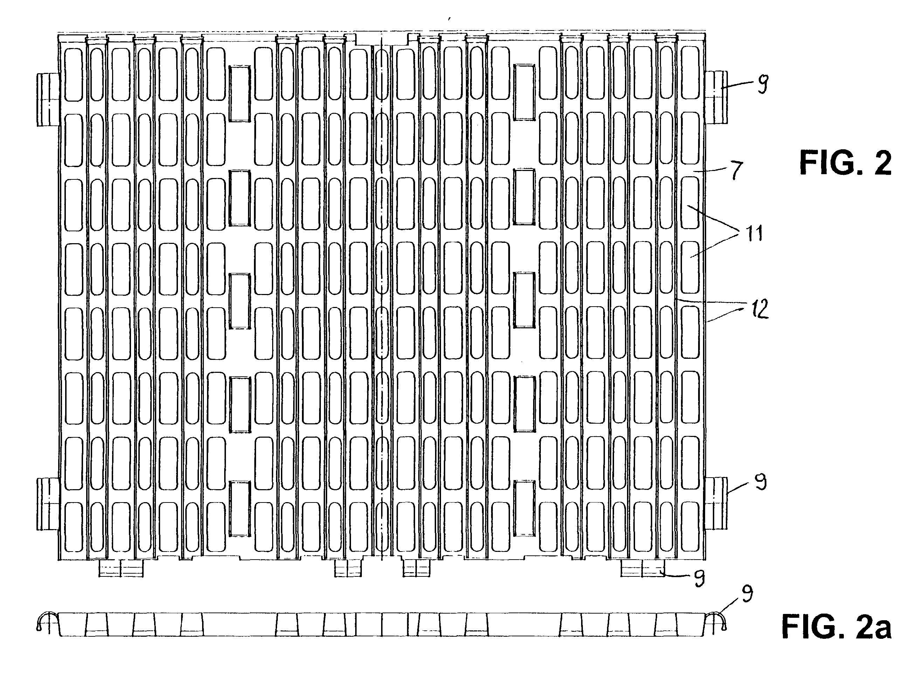

Wie die Fig. 2, 3 und 4 zeigen, können die Seitenwandteile 7 und 8 eine Vielzahl von Durchbrüchen 11 aufweisen, um Material und Gewicht zu reduzieren. Diese Durchbrüche 11 schränken die Stabilität nicht ein, da diese in der Hauptsache durch die quer zur Fläche, in der die Durchbrüche angeordnet sind, verlaufenden Wandsegmente 12 geschaffen wird.

Die Seitenwandteile können ggf. durch Metallprofile ausgesteift werden, was hier aber nicht dargestellt ist.

Die oberen Seitenwandteile 8 sind weiterhin auf ihrer dem Warenaufnahmeraum zugewandten Seite jeweils mit Federzungenpaaren 13 versehen, die der Sicherung des Klappbodens 5 im hochgeklappten Zustand dienen.

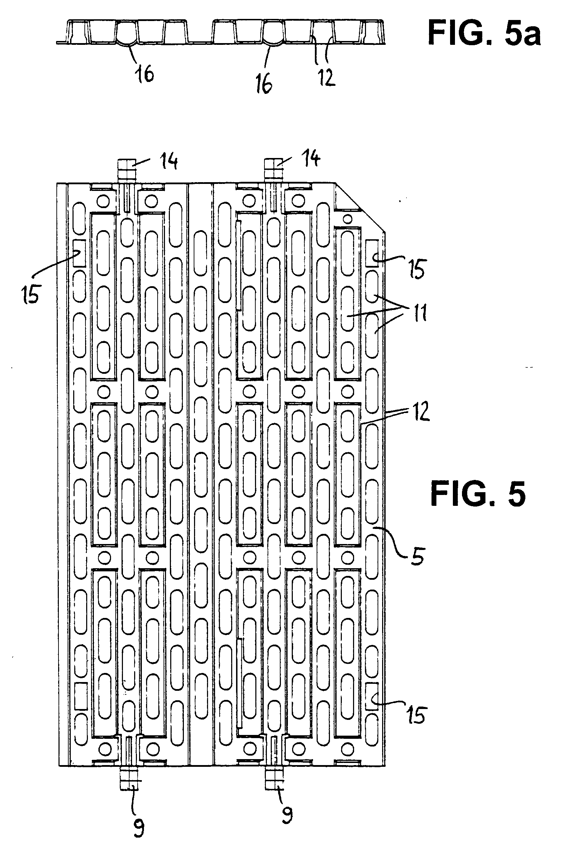

Der Klappboden 5, der gemäß Fig. 1 zweiteilig ausgeführt ist und von dem in Fig. 5 eine Hälfte dargestellt ist, hat einen ähnlichen Aufbau wie die Seitenwandteile 7 und 8. Man erkennt in Fig. 5 am unteren Rand des Klappbodens zwei Greifklauen 9, mit denen der Klappboden 5 am Querholm 6b des Rahmens 6 des einen Seitenteils 3 schwenkbar angeklipst werden kann, siehe Fig. 1. Am gegenüberliegenden Ende des Klappbodens 5 sind vergleichbare Greifklauen oder Klammern 14 ausgebildet, die leicht verrastend auf dem auf halber Höhe verlaufenden Querholm 6b des Rahmens 6 des gegenüberliegenden Seitenteils 4 zur Auflage kommen können, siehe wieder Fig. 1, oder aber diesen Holm nur einfach umgreifen, ohne daran federnd zu verrasten. Bei der letztgenannten Alternative ist das Hochklappen des Klappbodens 5 aus der abgesenkten Stellung erleichtert.

Der Klappboden 5 weist, neben den schon erläuterten Durchbrüchen 11 zur Gewichtserleichterung, einige besondere Durchbrüche 15 auf, die dazu bestimmt sind, von den Federzungenpaaren 13 durchdrungen zu werden, wenn der Klappboden 5 in die Vertikale hochgeschwenkt ist. Diese Federzungenpaare 13 verrasten in den Durchbrüchen 15 federnd und halten den Klappboden 5 in der vertikalen Stellung fest.

Die Querschnittsdarstellung von Fig. 5a zeigt außerdem Haltebügel 16, die der Sicherung von Verstärkungsstäben aus Metall (nicht dargestellt) dienen können, mit denen der Klappboden 5 bzw. dessen Hälften ausgesteift werden können.

## Patentansprüche

1. Rollpalette für Lebensmittel- oder Getränke-Märkte und für die Belieferung solcher Märkte mit Waren, bestehend aus einem mit Laufrollen (2) versehenen, rechteckigen Bodenteil (1) und zwei einander gegenüberstehenden, sich von dem Bodenteil (1) im Randbereich desselben erhebenden Seitenteilen (3,4), die Seitenwände bilden, **dadurch gekennzeichnet**, daß über dem Bodenteil (1) an einer Stelle, die vom oberen Ende der Seitenteile (3,4) wenigstens so weit entfernt ist, wie der Abstand zwischen den Seitenteilen (3,4) beträgt, an der Innenseite des einen Seitenteils (3) ein Klappboden (5) angelenkt ist und in etwa gleicher Höhe an der Innenseite des anderen Seitenteils (4) eine Auflagereinrichtung (6b) für den Klappboden (5) ausgebildet ist.

2. Rollpalette nach Anspruch 1, dadurch gekennzeichnet, daß der Klappboden (5) Halteeinrichtungen 14 aufweist, die ihn im heruntergeklappten Zustand mit der Auflagereinrichtung (6b) formschlüssig verbinden.

3. Rollpalette nach einem der Ansprüche 1 und 2, dadurch gekennzeichnet, daß der Klappboden (5) aus zwei nebeneinander angeordneten Teilböden besteht, die einzeln klappbar sind.

4. Rollpalette nach einem der Ansprüche 1 bis 3, dadurch gekennzeichnet, daß das den Klappboden (5) haltende Seitenteil (3) mit einer Sicherungseinrichtung (13) zum Festhalten des Klappbodens (5) in hochgeklappten Zustand versehen ist.

5. Rollpalette nach einem der Ansprüche 1 bis 4, dadurch gekennzeichnet, daß die Seitenteile (3,4) aus einem starren Rahmen (6) und daran befestigten, profilierten Wandteilen (7,8) bestehen.

6. Rollpalette nach Anspruch 5, dadurch gekennzeichnet, daß der Klappboden (5) ein den Wandteilen (7,8) angepaßtes Profil aufweist.

7. Rollpalette nach einem der Ansprüche 5 und 6, dadurch gekennzeichnet, daß die Rahmen (6) jeweils aus Metallrohren (6a,6b) bestehen.

8. Rollpalette nach einem der Ansprüche 5 bis 7, dadurch gekennzeichnet, daß die Wandteile (7,8) und der Klappboden (5) aus Plastikspritzteilen bestehen und an dem Rahmen (6) verrastet sind.

9. Rollpalette nach einem der Ansprüche 5 bis 8, dadurch gekennzeichnet, daß der Klappboden (5) an einem Querholm (6b) des Rahmens (6) des einen Seitenteils (3) verrastet ist und im heruntergeklappten Zustand auf dem Querholm (6b) des Rahmens (6) des anderen Seitenteils (4) aufliegt und dort vorzugsweise verrastet ist.

10. Rollpalette nach einem der Ansprüche 8 und 9, dadurch gekennzeichnet, daß der Klappboden durch wenigstens einen Metallprofilstab verstärkt ist.

11. Rollpalette nach einem der Ansprüche 9 und 10, dadurch gekennzeichnet, daß die Wandteile (3,4) jeweils auch an den Querholmen (6b) des Rahmens (6) verrastet sind.
